# EUROPEAN PATENT APPLICATION

(11) **EP 3 035 596 A1**
(43) Date of publication of application: **22.06.2016**
(21) Application number: 14835773.4
(22) Date of filing: 12.06.2014
(51) Int. Cl.: H04L 12/24, H04L 12/26

(54) **LINK PERFORMANCE TEST METHOD AND DEVICE, LOGICAL PROCESSOR AND NETWORK PROCESSOR**

(30) Priority: 16.08.2013 CN 201310359494
(71) Applicant: ZTE Corporation, Shenzhen, Guangdong 518057 (CN)
(72) Inventor: YANG, Mingjie, Shenzhen Guangdong Province 518057 (CN); ZHAO, Zhiyong, Shenzhen Guangdong Province 518057 (CN)
(74) Representative: Novagraaf Technologies
(86) International application number: PCT/CN2014/079786
(87) International publication number: WO 2015/021816

(57) **Abstract**

The disclosure discloses a method and device for testing link performance, a logic processor and a Network Processor (NP). The method includes that: a first-type message is sent to an opposite node, and parameter information of the local node is acquired according to the first-type message; and a second-type message sent by the opposite node is received, and parameter information of the opposite node is acquired according to the second-type message, wherein a Central Processing Unit (CPU) of the local node is capable of calculating link performance between the local node and the opposite node according to the parameter information of the local node and the parameter information of the opposite node. By the solution, the local node and the opposite node may share their own parameter information to provide data support for the CPU of the local node by message interaction, thereby implementing processing optimization of the CPU of the local node and enabling the CPU of the local node to concentrate main resources for calculation work.

## Description

### Technical Field

The disclosure relates to the link testing field, and in particular to a method and device for testing link performance, a logic processor and an network processor (NP).

### Background

Along with rapid development of an Ethernet, Operation Administration Maintenance (OAM) technology of the Ethernet is consecutively proposed, and one of them is a Y.1731 Recommendation of an International Telecommunication Union Telecommunication Standardization Sector (ITU-T).

Under a standard proposed by the Y 1731 Recommendation, link performance detection work of the Ethernet is independently completed by an embedded Central Processing Unit (CPU) or an Application Specific Integrated Circuit (ASIC) chip at present, but for a telecom level Ethernet, a processing capability of the embedded CPU or the ASIC chip is quite limited, and a requirement may not be met. In addition, it is impossible to add a new function to the ASIC chip once the ASIC chip is produced, so that a current ASIC chip product is likely to be eliminated along with development of a technology. Moreover, ASIC chips of different manufacturers have different functions so as to be poor in adaptability.

### Summary

The technical problem to be solved by the embodiments of the disclosure is to provide a method and device for testing link performance, a logic processor and an NP.

In order to solve the above-mentioned technical problem, the embodiments of the disclosure provide a method for testing link performance, which may be applied to a logic processor of a local node, wherein the method includes that: sending a first-type message to an opposite node, and acquiring parameter information of the local node according to the first-type message; and receiving a second-type message sent by the opposite node, and acquiring parameter information of the opposite node according to the second-type message, wherein a Central Processing Unit, CPU, of the local node is capable of calculating link performance between the local node and the opposite node according to the parameter information of the local node and the parameter information of the opposite node.

In an example embodiment, the method further comprises: collecting statistics about the parameter information of the local node, and recording the parameter information of the local node in the first-type message.

In an example embodiment, the method further comprises: acquiring the parameter information of the local node from the first-type message and the parameter information of the opposite node from the second-type message and storing the parameter information of the local node and the parameter information of the opposite node, to enable the CPU of the local node to call the stored parameter information of the local node and the stored parameter information of the opposite node and calculate the link performance between the local node and the opposite node according to the called parameter information of the local node and the called parameter information of the opposite node.

In an example embodiment, the method further comprises: collecting statistics about the parameter information of the local node, and recording the parameter information of the local node in the first-type message.

In an example embodiment, the parameter information of the local node carried in the first-type message comprises: frame number information of the local node, wherein the frame number information of the local node comprises the number A of data frames sent to the opposite node by the local node within a corresponding period and the number A' of data frames received from the opposite node within the corresponding period; and the parameter information of the opposite node carried in the second-type message comprises: frame number information of the opposite node, wherein the frame number information of the opposite node comprises the number B of data frames received from the local node within the corresponding period and the number B' of data frames returned to the local node by the opposite node within the corresponding period.

In an example embodiment, the CPU of the local node is capable of calculating at least one of the following results: data frame loss of the local node, data frame loss of the opposite node, a data frame loss rate of the local node and a data frame loss rate of the opposite node, wherein the data frame loss of the local node=a difference between B' of two adjacent periods-a difference between A' of the two adjacent periods; the data frame loss of the opposite node=a difference between A of two adjacent periods-a difference between B of the two adjacent periods; the data frame loss rate of the local node=the data frame loss of the local node/the difference between B' of the two adjacent periods; and the data frame loss rate of the opposite node=the data frame loss of the opposite node/the difference between A of the two adjacent periods.

In an example embodiment, the parameter information of the local node carried in the first-type message comprises: time information of the local node, wherein the time information of the local node comprises a time point T1 when the local node sends a target message to the opposite node within a corresponding period and a time point T4 when the local node receives a target message returned by the opposite node within the corresponding period; and the parameter information of the opposite node carried in the second-type message comprises: time information of the opposite node, wherein the time information of the opposite end comprises a time point T2 when the opposite node receives the target message sent by the local node within the corresponding period and a time point T3 when the opposite node returns the target message to the local node within the corresponding period.

In an example embodiment, the CPU of the local node is capable of calculating at least one of the following results: a link delay and a link delay jitter between the local node and the opposite node, wherein the link delay=(T4-T1)-(T3-T2), and the link delay jitter is a difference of link delays between two adjacent periods.

In addition, the embodiment of the disclosure also provides a device for testing link performance, which may include: a sending component, configured to send a first-type message to an opposite node; a receiving component, configured to receive a second-type message sent by the opposite node; andan acquisition component, configured to acquire parameter information of a local node according to the first-type message and acquire parameter information of the opposite node according to the second-type message, wherein a Central Processing Unit, CPU, of the local node is capable of calculating link performance between the local node and the opposite node according to the parameter information of the local node and the parameter information of the opposite node.

In an example embodiment, the device further comprises: a statistical component, configured to collect statistics about the parameter information of the local node, and record the parameter information of the local node in the first-type message.

In an example embodiment, the device further comprises: a storage component, configured to acquire the parameter information of the local node from the first-type message and the parameter information of the opposite node from the second-type message and store the parameter information of the local node and the parameter information of the opposite node, to enable the CPU of the local node to call the stored parameter information of the local node and the stored parameter information of the opposite node and calculate the link performance between the local node and the opposite node according to the called parameter information of the local node and the called parameter information of the opposite node.

In an example embodiment, the device further comprises: a link alarming component, configured to, when a link between the local node and the opposite node has a connectivity failure, record link alarming information in the first-type message, thereby avoiding a CPU of the opposite node executing a work of calculating the link performance between the local node and the opposite node.

In addition, the embodiment of the disclosure further provides a logic processor, which may include the abovementioned device for testing link performance.

In addition, the embodiment of the disclosure further provides an NP, which may include a processor set, configured to calculate link performance between a local node and an opposite node according to parameter information of the local node and parameter information of the opposite node, wherein the NP may further include the abovementioned logic processor.

The solutions of the embodiment of the disclosure have advantages as follows:
According to the solutions, the local node and the opposite node share their own parameter information to provide data support for the CPU of the local node by message interaction, thereby implementing processing optimization of the CPU of the local node and enabling the CPU of the local node to concentrate main resources for calculation work.

### Brief Description of the Drawings

Fig. 1 is a schematic diagram of steps of a method for testing link performance according to an embodiment of the disclosure;
Fig. 2 is a structural diagram of a device for testing link performance according to an embodiment of the disclosure; and
Fig. 3 is a structural diagram of an NP according to an embodiment of the disclosure.

### Detailed Description of the Embodiments

In order to make the technical problem to be solved, technical solutions and advantages of the disclosure clearer, the disclosure will be described hereinafter in detail with reference to the drawings and in conjunction with embodiments.

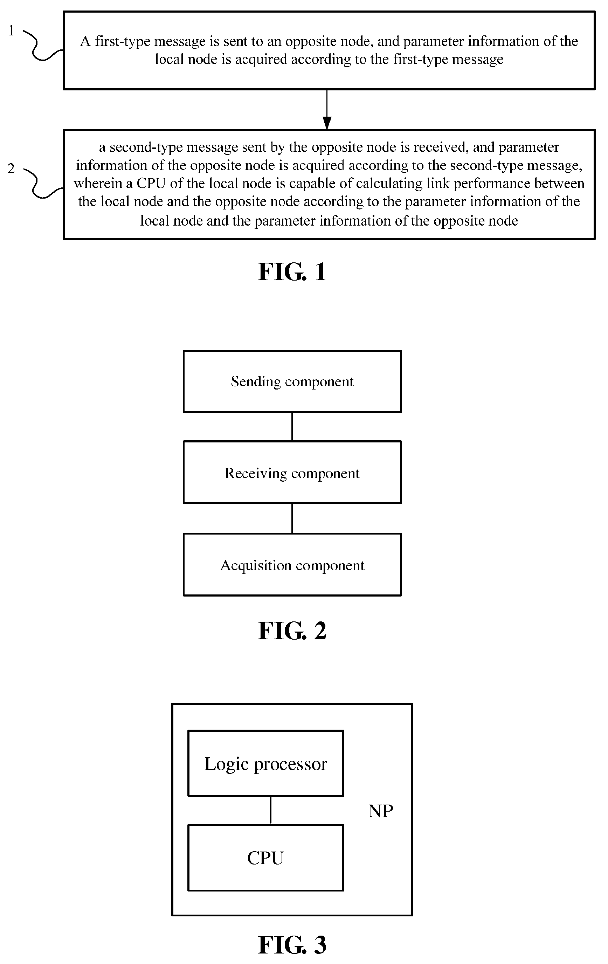

As shown in Fig. 1, a method for testing link performance is applied to a logic processor of a local node, wherein the method includes:
Step 1: a first-type message is sent to an opposite node, and parameter information of the local node is acquired according to the first-type message; and
Step 2: a second-type message sent by the opposite node is received, and parameter information of the opposite node is acquired according to the second-type message, wherein a CPU of the local node is capable of calculating link performance between the local node and the opposite node according to the parameter information of the local node and the parameter information of the opposite node.

According to the method, the local node and the opposite node share their own parameter information to provide data support for the CPU of the local node by message interaction, thereby implementing processing optimization of the CPU of the local node and enabling the CPU of the local node to concentrate main resources for calculation work.

In addition, in an example embodiment of the disclosure, before Step 1, the method may further include that:
statistics about the parameter information of the local node is collected, and the parameter information of the local node is recorded in the first-type message.

According to the embodiment, the statistics about the parameter information of the local node may further be collected on a basis of the abovementioned method, thereby further reducing a processing burden of the CPU of the local node.

In addition, in a process of determining link performance, it is necessary to compare the parameter information of the local node and the opposite node at different moments, and the first-type message and the second-type message only correspond to the parameter information of nodes at a certain moment, so that an information accumulation process is needed. Therefore, in the embodiment of the disclosure, the method further includes that:
the parameter information of the local node is acquired from the first-type message and the parameter information of the opposite node is acquired from the second-type message and the parameter information of the local node and the parameter information of the opposite node are stored, thereby enabling the CPU of the local node to call the stored parameter information of the local node and the stored parameter information of the opposite node and calculate the link performance between the local node and the opposite node according to the called parameter information of the local node and the called parameter information of the opposite node. It needs to be noted that the stored parameter information of the local node in the embodiment is acquired from the first-type message rather than acquired in a statistical process.

In addition, when a link between the local node and the opposite node has a connectivity problem, subsequent link performance testing is meaningless, and in order to avoid a resource of the CPU being occupied under such a condition, in the embodiment of the disclosure, if the link between the local node and the opposite node has a connectivity failure, link alarming information is recorded in the first-type message to avoid a CPU of the opposite node executing a work of calculating the link performance between the local node and the opposite node.

Specifically, in the embodiment of the disclosure, the parameter information of the local node in the first-type message includes: frame number information of the local node, wherein the frame number information of the local node includes a number A of data frames sent to the opposite node by the local node within a corresponding period and a number A' of data frames received from the opposite node within the corresponding period; and
the parameter information of the opposite node in the second-type message includes: frame number information of the opposite node, wherein the frame number information of the opposite node includes a number B of data frames received from the local node within a corresponding period and a number B' of data frames returned to the local node by the opposite node within the corresponding period.
Wherein, the CPU of the local node is capable of calculating at least one of the following results: data frame loss of the local node, data frame loss of the opposite node, a data frame loss rate of the local node and a data frame loss rate of the opposite node, wherein the data frame loss of the local node=a difference between B' of every two adjacent periods-a difference between A' of the two adjacent periods; the data frame loss of the opposite node=a difference between A of the two adjacent periods-a difference between B of the two adjacent periods; the data frame loss rate of the local node=the data frame loss of the local node/the difference between B' of the two adjacent periods; and the data frame loss rate of the opposite node=the data frame loss of the opposite node/the difference between A of the two adjacent periods.

According to the method, statistics about a condition of data stream interaction between the local node and the opposite node may be periodically collected. In consideration of a link delay factor, the opposite node may not completely receive a data stream sent by the local node within a period, so that the CPU of the local node calculates the data frame loss of two nodes by adopting numbers of the data frames of two adjacent periods.

In addition, with respect to the embodiment of the disclosure, a delay condition between the local node and the opposite node may further be calculated, wherein
the parameter information of the local node in the first-type message includes: time information of the local node, wherein the time information of the local node includes a time point T1 when the local node sends a target message to the opposite node within a corresponding period and a time point T4 when the local node receives a target message returned by the opposite node within the corresponding period; and
the parameter information of the opposite node in the second-type message may include: time information of the opposite node, wherein the time information of the opposite end includes a time point T2 when the opposite node receives the target message sent by the local node within a corresponding period and a time point T3 when the opposite node returns the target message to the local node within the corresponding period.

Specifically, the CPU of the local node is capable of calculating at least one of the following results: a link delay and a link delay jitter between the local node and the opposite node, wherein the link delay=(T4-T1)-(T3-T2), and the link delay jitter is a difference of link delays between two adjacent periods.

According to the method of the embodiment, a period is also set, and statistics about time of target message interaction between the local node and the opposite node is collected in each period to calculate link delays of two nodes in different periods and calculate link delay jitter according to the link delays of two adjacent periods.

It needs to be noted that a local end and an opposite end are relatively opposite in position, so that the method of the disclosure is applicable to the local node as well as the opposite end. The method of the disclosure will be described below with the local node as an executed object in detail.

Considering that the local node is required to perform message interaction with the opposite node to share their own parameter information, in an example embodiment, frame number information of the two nodes in a Dual-ended LM message contained in an original Continuity Check Message (CCM) is recorded on a basis of a standard proposed by Y.1731 Recommendations and a CCM sending time interval as a period for testing a data frame loss condition of the two nodes is set, so as to avoid additional configuration of a new protocol message. In addition, in the Y.1731 standard, the CCM may also contain the link alarming information mentioned above, and when the link between the local node and the opposite node has the connectivity failure, the link alarming information may be recorded in the CCM. The time information of the two nodes may be carried in a Delay Measurement Message (DMM) in Y.1731 Recommendations. In addition, in order to reduce the number of messages as much as possible, the DMM may directly employed as a target message, the link delay and the link delay jitter are calculated according to receiving and sending time of the DMM at the two nodes, and a sending time interval of the DMM may be employed as a period for testing the delay condition of the two nodes. It needs to be noted that a message sent to the opposite node by the local node is the first-type message mentioned above, and a message sent to the local node by the opposite node is the second-type message mentioned above.

Wherein, a logic processor executes the following steps according to the method:
Step 301: the logic processor of the local node establishes a local time system, simultaneously establishes a node configured for link maintenance, and establishes a frame number counter of a data stream for a link;
Step 302: whether the link from the local node to the opposite node has a connectivity failure or not is judged in each CCM sending period;
Step 303: if the link has a connectivity failure, the link alarming information is recorded in a CCM to be sent, and then Step 305 is executed;
Step 304: if the link does not have any connectivity failure, a number A of data frames sent to the opposite node by the local node within a current period and a number A' of data frames received from the opposite node within the corresponding period are recorded in a Dual-ended LM of the CCM, the number A and the number A' in the Dual-ended LM are locally stored, and Step 305 is executed;
Step 305: the CCM is sent to a logic processor of the opposite node;
Step 306: the opposite node extracts the number A and the number A' from the CCM, and stores the number A and the number A'; the opposite node also stores a number B of data frames sent by the local node within a current period and a number B' of data frames returned to the local node by the opposite node within the corresponding period, and records the numbers B and B' in the CCM;
Step 307: the opposite node returns the CCM to the logic processor of the local node;
Step 308: the local node extracts the number B and the number B' from the CCM, and locally stores the number B and the number B';
Step 309: if there is no link alarming information, the local node simultaneously extracts a current time point T1 from the local time system for storage in each DMM sending period, fills the current time point T1 into a DMM, and then sends the DMM to the opposite node;
Step 310: the opposite node extracts a current time point T2 from a time system of the opposite node for storage when receiving the DMM, fills the current time point T2 into the DMM, acquires the current time point T1 from the DMM, and stores the current time point T1; and
Step 311: the opposite node extracts a current time point T3 from the time system of the opposite node for storage, records the current time point T3 in the DMM, and simultaneously returns the DMM to the local node.

In addition, if the opposite node is also required to perform link performance testing, Step 312 is executed after Step 311:
Step 312: the local node extracts a current time point T4 from the local time system at the same time of receiving the DMM returned by the opposite node, records the current time point T4 in the DMM, then locally stores the current time point T4 in the DMM, and sends the DMM to the opposite node.

Wherein, the CPU of the local node executes the following steps according to the method:
Step 401: whether a current maintenance link from the local node to the opposite node has link alarming information or not is acquired from the CCM;
Step 402: if the link alarming information exists, link performance testing work is not executed;
Step 403: if the link alarming information does not exist, frame number information of two adjacent CCM periods is extracted from information stored by the logic processor, the data frame loss of the local node, the data frame loss of the opposite node, the data frame loss rate of the local node and the data frame loss rate of the opposite node are calculated, and Step 404 is simultaneously executed;
   wherein the data frame loss of the local node=a difference between B' of every two adjacent periods-a difference between A' of the two adjacent periods, the data frame loss of the opposite node=a difference between A of the two adjacent periods-a difference between B of the two adjacent periods, the data frame loss rate of the local node=the data frame loss of the local node/the difference between B' of the two adjacent periods, and the data frame loss rate of the opposite node=the data frame loss of the opposite node/the difference between A of the two adjacent periods; and
Step 404: the current time point T1, the current time point T2, the current time point T3 and the current time point T4 of two adjacent DMM periods are extracted from the logic processor, and a link delay and a link delay jitter of the two adjacent DMM periods are calculated;
   wherein the link delay=(T4-T1)-(T3-T2), and the link delay jitter is a difference of link delays between two adjacent periods.

It needs to be noted that all the parameter information stored by the local node is consistent with all the parameter information stored by the opposite node, so that a CPU of the opposite node may also perform link performance testing.

In addition, as shown in Fig. 2, the embodiment of the disclosure further provides a device for testing link performance, which includes:
a sending component, configured to send a first-type message to an opposite node;
a receiving component, configured to receive a second-type message sent by the opposite node; and
an acquisition component, configured to acquire parameter information of a local node according to the first-type message and acquire parameter information of the opposite node according to the second-type message,
wherein a CPU of the local node is capable of calculating link performance between the local node and the opposite node according to the parameter information of the local node and the parameter information of the opposite node.

According to the device for testing link performance, a logic processor may enable the local node and the opposite node to share their own parameter information to provide data support for the CPU of the local node by message interaction, thereby implementing processing optimization of the CPU of the local node and enabling the CPU of the local node to concentrate main resources for calculation work.

In addition, the device of the disclosure further includes:
a statistical component, configured to collect statistics about the parameter information of the local node, and record the parameter information of the local node in the first-type message.

According to the embodiment, the statistics about the parameter information of the local node may further be collected on a basis of the abovementioned device, thereby further reducing a processing burden of the CPU of the local node.

In addition, in a process of determining link performance, it is necessary to compare the parameter information of the local node and the opposite node at different moments, and the first-type message and the second-type message only correspond to the parameter information of the nodes at a certain moment, so that an information accumulation process is needed. Therefore, in the embodiment of the disclosure, the device further includes:
a storage component, configured to acquire the parameter information of the local node from the first-type message and the parameter information of the opposite node from the second-type message and store the parameter information of the local node and the parameter information of the opposite node, thereby enabling the CPU of the local node to call the stored parameter information of the local node and the stored parameter information of the opposite node and calculate the link performance between the local node and the opposite node according to the called parameter information of the local node and the called parameter information of the opposite node. It needs to be noted that the stored parameter information of the local node in the embodiment is acquired from the first-type message rather than acquired in a statistical process.

In addition, when a link between the local node and the opposite node has a connectivity problem, subsequent link performance testing is meaningless, and in order to avoid a resource of the CPU being occupied under such a condition, in the embodiment of the disclosure, the device further includes
a link alarming component, configured to, when the link between the local node and the opposite node has a connectivity failure, record link alarming information in the first-type message, thereby avoiding a CPU of the opposite node executing a work of calculating the link performance between the local node and the opposite node.

Specifically, in the embodiment of the disclosure, the parameter information of the local node in the first-type message includes: frame number information of the local node, wherein the frame number information of the local node includes a number A of data frames sent to the opposite node by the local node within a corresponding period and a number A' of data frames received from the opposite node within the corresponding period; and
the parameter information of the opposite node in the second-type message includes: frame number information of the opposite node, wherein the frame number information of the opposite node includes a number B of data frames received from the local node within the corresponding period and a number B' of data frames returned to the local node by the opposite node within the corresponding period.

Wherein, the CPU of the local node is capable of calculating at least one of the following results: data frame loss of the local node, data frame loss of the opposite node, a data frame loss rate of the local node and a data frame loss rate of the opposite node, wherein the data frame loss of the local node=a difference between B' of every two adjacent periods-a difference between A' of the two adjacent periods; the data frame loss of the opposite node=a difference between A of the two adjacent periods-a difference between B of the two adjacent periods; the data frame loss rate of the local node=the data frame loss of the local node/the difference between B' of the two adjacent periods; and the data frame loss rate of the opposite node=the data frame loss of the opposite node/the difference between A of the two adjacent periods.

The statistical component may periodically collect statistics about a condition of data stream interaction between the local node and the opposite node. In consideration of a link delay factor, the opposite node may not completely receive a data stream sent by the local node within a period, so that the CPU of the local node calculates the data frame loss of the two nodes by adopting numbers of the data frames of two adjacent periods.

In addition, with respect to the embodiment of the disclosure, a delay condition between the local node and the opposite node may further be calculated, wherein
the parameter information of the local node in the first-type message includes: time information of the local node, wherein the time information of the local node includes the time point T1 when the local node sends a target message to the opposite node within a corresponding period and the time point T4 when the local node receives a target message returned by the opposite node within the corresponding period; and
the parameter information of the opposite node in the second-type message may include: time information of the opposite node, wherein the time information of the opposite end includes the time point T2 when the opposite node receives the target message sent by the local node within a corresponding period and the time point T3 when the opposite node returns the target message to the local node within the corresponding period.

Specifically, the CPU of the local node is capable of calculating at least one of the following results: a link delay and a link delay jitter between the local node and the opposite node, wherein the link delay=(T4-T1)-(T3-T2), and the link delay jitter is a difference of link delays between two adjacent periods.

In the embodiment, a period is also set, and a second statistical sub-component collects statistics about time of target message interaction between the local node and the opposite node in each period, thereby enabling the CPU of the local node to calculate link delays of the two nodes in different periods and calculate the link delay jitter according to the link delays of two adjacent periods.

Obviously, the device of the embodiment corresponds to the method for testing link performance in the disclosure, and a technical effect achieved by the method for testing link performance may also be achieved by the device in the embodiment.

In addition, the embodiment of the disclosure further provides a logic processor, which includes the abovementioned device for testing link performance, which is capable of enabling a local node and an opposite node to share their own parameter information to provide data support for the CPU of the local node by message interaction, thereby implementing processing optimization of the CPU of the local node and enabling the CPU of the local node to concentrate main resources for calculation work.

In addition, the embodiment of the disclosure further provides an NP, which includes a processor set, configured to calculate link performance between a local node and an opposite node according to parameter information of the local node and parameter information of the opposite node, wherein the NP further includes the abovementioned logic processor.

Compared with a conventional embedded CPU and an ASIC chip, the NP of the disclosure has a higher processing capability; and in addition, the disclosure may also configure a message, a parameter required by performance testing and a calculation method for performance testing through the processor set, so that higher flexibility is achieved.

The above are example implementation modes of the disclosure, it needs to be noted that those skilled in the art may further make a plurality of improvements and embellishments without departing from the principle of the disclosure, and these improvements and embellishments shall fall within the scope of protection of the disclosure.

### Industrial Practicability

The technical solutions provided by the disclosure are applicable to a link performance testing process, and a local node and an opposite node may share their own parameter information to provide data support for a CPU of the local node by message interaction, thereby implementing processing optimization of the CPU of the local node and enabling the CPU of the local node to concentrate main resources for calculation work.

## Claims

1. A method for testing link performance, which is applied to a logic processor of a local node, wherein the method comprises:
sending a first-type message to an opposite node, and acquiring parameter information of the local node according to the first-type message; and
receiving a second-type message sent by the opposite node, and acquiring parameter information of the opposite node according to the second-type message, wherein a Central Processing Unit, CPU, of the local node is capable of calculating link performance between the local node and the opposite node according to the parameter information of the local node and the parameter information of the opposite node.

2. The method as claimed in claim 1, wherein the method further comprises:
collecting statistics about the parameter information of the local node, and recording the parameter information of the local node in the first-type message.

3. The method as claimed in claim 2, wherein the method further comprises:
acquiring the parameter information of the local node from the first-type message and the parameter information of the opposite node from the second-type message and storing the parameter information of the local node and the parameter information of the opposite node, to enable the CPU of the local node to call the stored parameter information of the local node and the stored parameter information of the opposite node and calculate the link performance between the local node and the opposite node according to the called parameter information of the local node and the called parameter information of the opposite node.

4. The method as claimed in claim 1, wherein the method further comprises:
collecting statistics about the parameter information of the local node, and recording the parameter information of the local node in the first-type message.

5. The method as claimed in claim 2, wherein
the parameter information of the local node carried in the first-type message comprises:
frame number information of the local node, wherein the frame number information of the local node comprises the number A of data frames sent to the opposite node by the local node within a corresponding period and the number A' of data frames received from the opposite node within the corresponding period; and
the parameter information of the opposite node carried in the second-type message comprises: frame number information of the opposite node, wherein the frame number information of the opposite node comprises the number B of data frames received from the local node within the corresponding period and the number B' of data frames returned to the local node by the opposite node within the corresponding period.

6. The method as claimed in claim 5, wherein
the CPU of the local node is capable of calculating at least one of the following results:
data frame loss of the local node, data frame loss of the opposite node, a data frame loss rate of the local node and a data frame loss rate of the opposite node, wherein the data frame loss of the local node=a difference between B' of two adjacent periods-a difference between A' of the two adjacent periods; the data frame loss of the opposite node=a difference between A of two adjacent peuods-a difference between B of the two adjacent periods; the data frame loss rate of the local node=the data frame loss of the local node/the difference between B' of the two adjacent periods; and the data frame loss rate of the opposite node=the data frame loss of the opposite node/the difference between A of the two adjacent periods.

7. The method as claimed in claim 2, wherein
the parameter information of the local node carried in the first-type message comprises:
time information of the local node, wherein the time information of the local node comprises a time point T1 when the local node sends a target message to the opposite node within a corresponding period and a time point T4 when the local node receives a target message returned by the opposite node within the corresponding period; and
the parameter information of the opposite node carried in the second-type message comprises: time information of the opposite node, wherein the time information of the opposite end comprises a time point T2 when the opposite node receives the target message sent by the local node within the corresponding period and a time point T3 when the opposite node returns the target message to the local node within the corresponding period.

8. The method as claimed in claim 7, wherein
the CPU of the local node is capable of calculating at least one of the following results: a link delay and a link delay jitter between the local node and the opposite node, wherein the link delay=(T4-T1)-(T3-T2), and the link delay jitter is a difference of link delays between two adjacent periods.

9. A device for testing link performance, which is applied to a logic processor of a local node, wherein the device comprises:
a sending component, configured to send a first-type message to an opposite node;
a receiving component, configured to receive a second-type message sent by the opposite node; and
an acquisition component, configured to acquire parameter information of a local node according to the first-type message and acquire parameter information of the opposite node according to the second-type message,
wherein a Central Processing Unit, CPU, of the local node is capable of calculating link performance between the local node and the opposite node according to the parameter information of the local node and the parameter information of the opposite node.

10. The device as claimed in claim 9, wherein the device further comprises:
a statistical component, configured to collect statistics about the parameter information of the local node, and record the parameter information of the local node in the first-type message.

11. The device as claimed in claim 10, wherein the device further comprises:
a storage component, configured to acquire the parameter information of the local node from the first-type message and the parameter information of the opposite node from the second-type message and store the parameter information of the local node and the parameter information of the opposite node, to enable the CPU of the local node to call the stored parameter information of the local node and the stored parameter information of the opposite node and calculate the link performance between the local node and the opposite node according to the called parameter information of the local node and the called parameter information of the opposite node.

12. The device as claimed in claim 9, wherein the device further comprises:
a link alarming component, configured to, when a link between the local node and the opposite node has a connectivity failure, record link alarming information in the first-type message, thereby avoiding a CPU of the opposite node executing a work of calculating the link performance between the local node and the opposite node.

13. A logic processor, comprising the device for testing link performance as claimed in any one of claims 9 to 12.

14. A Network Processor, NP, comprising a processor set, configured to calculate link performance between a local node and an opposite node according to parameter information of the local node and parameter information of the opposite node, wherein the NP further comprises the logic processor as claimed in claim 13.
